# EUROPEAN PATENT APPLICATION

(11) **EP 3 361 339 A1**
(43) Date of publication of application: **15.08.2018**
(21) Application number: 18154799.3
(22) Date of filing: 02.02.2018
(51) Int. Cl.: G05B 19/406, G05B 19/409, G05B 19/418

(54) **CUTTING NOTIFICATION APPARATUS AND CUTTING SYSTEM**

(30) Priority: 02.02.2017 JP 2017017540
(71) Applicant: Roland DG Corporation, Shizuoka 431-2103 (JP)
(72) Inventor: KANJA, Tetsuya, Hamamatsu-shi, Shizuoka 431-2103 (JP)
(74) Representative: Grünecker Patent- und Rechtsanwälte PartG mbB

(57) **Abstract**

File identifiers are assigned to machining files. An association list generation processor generates an association list that creates an association between each of the file identifiers and an associated one of target identifiers. The target identifiers are identifiers of workpieces to be cut in accordance with machining programs in the machining files associated with the file identifiers. During cutting, a notification side reception processor receives information on a yet-to-be-cut identifier and information on a cut identifier from a controller. The yet-to-be-cut identifier is the target identifier of the workpiece that is yet to be cut. The cut identifier is the target identifier of the workpiece that is being cut or has finished being cut. A notifying processor provides a notification indicating that the workpiece associated with the yet-to-be-cut identifier is yet to be cut and the workpiece associated with the cut identifier is being cut or has finished being cut.

## Description

### CROSS-REFERENCE TO RELATED APPLICATIONS

This application claims priority to Japanese Patent Application No. 2017-017540 filed in Japan on February 2, 2017.

### BACKGROUND OF THE INVENTION

### 1. Field of the Invention

The present invention relates to cutting notification apparatuses and cutting systems.

### 2. Description of the Related Art

A cutting apparatus to cut a workpiece made of a ceramic material or a resin material, for example, into a desired shape is known in the related art. Examples of such a cutting apparatus include an automatic workpiece changer disclosed in JP 5-16051 A. The automatic workpiece changer contains a plurality of workpieces.

The automatic workpiece changer disclosed in JP 5-16051 A includes: a holder capable of holding a plurality of workpieces; a cutter to cut each workpiece in a machining area; a conveyor to convey each workpiece between the holder and the machining area; and a controller. Each workpiece is mounted on an associated adapter. Each adapter is provided with a data storage storing a machining program number. A path through which each workpiece is to be conveyed by the conveyor is provided with a data reader to read the machining program number stored in each data storage. This path will hereinafter be referred to as a "conveyance path". The controller stores machining programs each associated with one of the machining program numbers. The controller controls the cutter in accordance with the machining programs associated with the machining program numbers read by the data reader.

The automatic workpiece changer disclosed in JP 5-16051 A is configured such that while each workpiece is conveyed by the conveyor, the data reader reads the machining program number stored in the data storage of the adapter on which the workpiece is mounted. Each workpiece is automatically cut in the machining area in accordance with the machining program associated with the machining program number read by the data reader. This enables the automatic workpiece changer to automatically cut a plurality of workpieces.

When a user of the automatic workpiece changer disclosed in JP 5-16051 A cuts workpieces, however, the user recognizes completion of cutting on the workpieces when cutting on all the workpieces is finished. Thus, the user of the automatic workpiece changer disclosed in JP 5-16051 A is unable to know which workpiece has finished being cut and which workpiece is not yet cut during the course of cutting on the workpieces.

### SUMMARY OF THE INVENTION

Accordingly, embodiments of the present invention provide a cutting notification apparatus and a cutting system that enable a user to determine whether each of workpieces has finished being cut during cutting performed in accordance with machining programs executed to automatically cut the workpieces.

An embodiment of the present invention provides a cutting notification apparatus being configured to provide a notification indicating whether each of a plurality of workpieces has finished being cut. The cutting notification apparatus is configured to be included in a cutting system. The cutting system includes a workpiece container, a cutting apparatus, a workpiece conveyor, and a controller. The workpiece container includes a holder to hold the workpieces. The cutting apparatus is configured to cut the workpieces in accordance with machining programs. The workpiece conveyor is configured to convey the workpiece held in the holder to the cutting apparatus. The controller is configured or programmed to control the cutting apparatus and the workpiece conveyor. Identifiers to identify the workpieces are assigned to the workpieces. The cutting notification apparatus includes a storage processor, a file identifier addition processor, an association list generation processor, a notification side transmission processor, a notification side reception processor, and a notifying processor. The storage processor stores machining files and a target list. The machining files each store an associated one of the machining programs. The target list is a list of target identifiers that are the identifiers assigned to the workpieces to be cut in accordance with the machining programs of the machining files. The file identifier addition processor is configured to add file identifier commands to the machining programs of the machining files. The file identifier commands designate file identifiers to identify the machining files. The association list generation processor is configured to generate an association list that creates an association between each of the file identifiers and an associated one of the target identifiers of the workpieces to be cut in accordance with the machining programs in the machining files to which the file identifier commands associated with the file identifiers are added. The notification side transmission processor is configured to transmit, to the controller, the association list and the machining programs of the machining files to which the file identifier commands designating the file identifiers in the association list are added. The notification side reception processor is configured to receive information on a yet-to-be-cut identifier from the controller. The yet-to-be-cut identifier is the target identifier associated with the file identifier in the association list other than an execution file identifier. The execution file identifier is the file identifier designated by the file identifier command to be executed during cutting or the file identifier designated by the file identifier command that has already been executed. The notifying processor is configured to provide a notification indicating that the workpiece associated with the yet-to-be-cut identifier is yet to be cut, and provide a notification indicating that the workpiece associated with a cut identifier is being cut or has finished being cut. The cut identifier is the target identifier in the association list other than the yet-to-be-cut identifier.

The cutting notification apparatus sets the file identifier for each of the machining files. This enables the controller of the cutting system to easily recognize, on the basis of the file identifier, the machining program of which machining file is being executed by the cutting apparatus. The cutting notification apparatus generates the association list that creates an association between each of the file identifiers and an associated one of the target identifiers designated by the machining programs in the machining files to which the file identifier commands associated with the file identifiers are added. This clarifies the association between each file identifier and the associated target identifier. The use of the association list makes it possible to easily recognize which workpiece is yet to be cut and which workpiece has finished being cut on the basis of the execution file identifier that is the file identifier designated by the file identifier command to be executed next or the file identifier designated by the file identifier command that has already been executed. Thus, the notifying processor provides a notification indicating which workpiece is yet to be cut and which workpiece has finished being cut. This notification enables a user to determine, even during cutting, whether each workpiece has finished being cut.

Various embodiments of the present invention provide a cutting notification apparatus and a cutting system that enable a user to determine whether each of workpieces has finished being cut during cutting performed in accordance with machining programs executed to automatically cut the workpieces.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view of a cutting system according to an embodiment of the present invention.
FIG. 2 is a plan view of a workpiece to which an adapter is attached.
FIG. 3 is a perspective view of the cutting system, with a door of a workpiece container opened.
FIG. 4 is a front view of a holder, schematically illustrating the positional relationship between the holder and a first conveying mechanism.
FIG. 5 is a plan view of a workpiece conveyor, with the workpiece grasped by a grasper.
FIG. 6 is a plan view of the workpiece conveyor, with the workpiece not grasped by the grasper.
FIG. 7 is a front view of a cutting apparatus.
FIG. 8 is a perspective view of a tool magazine.
FIG. 9 is a perspective view of a rotary supporting member and a clamp.
FIG. 10 is a block diagram of the cutting system.
FIG. 11 is a block diagram of a controller and a cutting notification apparatus.
FIG. 12 is a diagram illustrating a display screen.
FIG. 13 is a flow chart illustrating a control procedure to be performed by the cutting system before start of cutting.
FIG. 14 is a flow chart illustrating a procedure for notifying, during cutting, a user of whether each workpiece held in the holder has finished being cut.
FIG. 15 illustrates an association list.

### DETAILED DESCRIPTION OF THE PREFERRED EMBODIMENTS

A cutting notification apparatus 130 according to an embodiment of the present invention and a cutting system 100 including the cutting notification apparatus 130 will be described below with reference to the drawings. The embodiment described below is naturally not intended to limit the present invention in any way. Components or elements having the same functions are identified by the same reference signs, and description thereof will be simplified or omitted when deemed redundant.

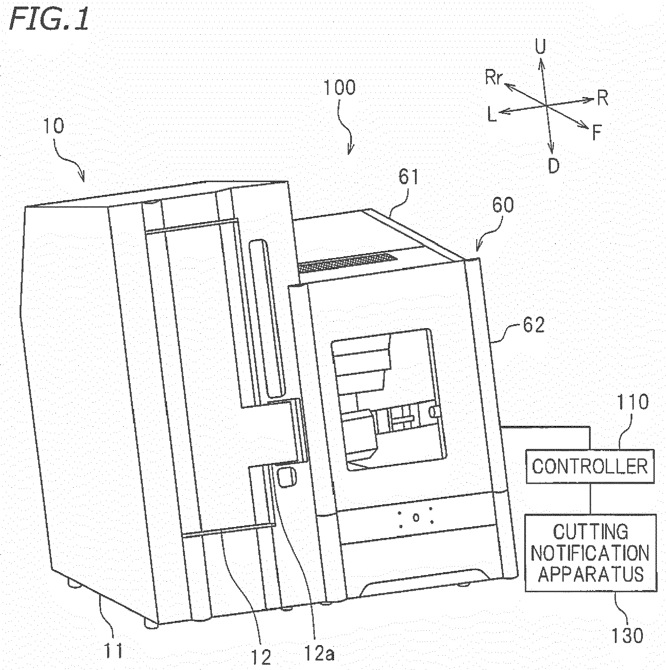

FIG. 1 is a perspective view of the cutting system 100 according to the present embodiment. The following description is based on the assumption that when a user faces the front of the cutting system 100, a direction from the rear of the cutting system 100 toward the user is a forward direction and a direction from the user toward the rear of the cutting system 100 is a rearward direction. The terms "right", "left", "up", and "down" respectively refer to right, left, up, and down with respect to the user facing the front of the cutting system 100. The reference signs F, Rr, R, L, U, and D in the drawings respectively represent front, rear, right, left, up, and down. Assuming that an X axis, a Y axis, and a Z axis are perpendicular to each other, the cutting system 100 according to the present embodiment is disposed on a plane including the X axis and the Y axis. In the present embodiment, the X axis extends in the front-rear direction, the Y axis extends in the right-left direction, and the Z axis extends in the up-down direction. The reference sign θx represents a rotational direction around the X axis. The reference sign θy represents a rotational direction around the Y axis. The reference sign θz represents a rotational direction around the Z axis. These directions are defined merely for the sake of convenience of description and do not limit in any way how the cutting system 100 may be installed. These directions do not limit the present invention in any way.

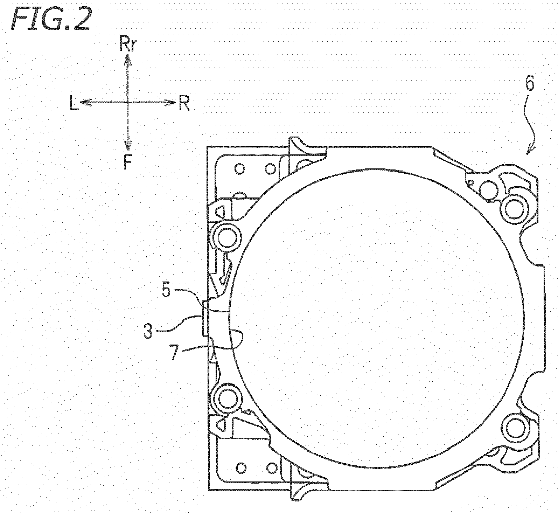

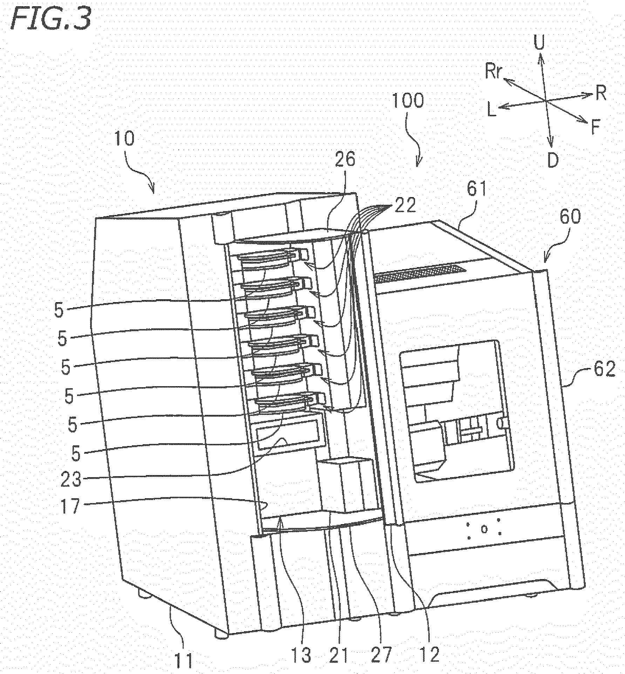

FIG. 2 is a plan view of a workpiece 5 to which an adapter 6 is attached. In the present embodiment, the cutting system 100 is configured to contain a plurality of workpieces 5 (see FIGS. 2 and 3). The cutting system 100 is configured to select one of the workpieces 5 from those contained in the cutting system 100 and cut the workpiece 5 selected. Each workpiece 5 is an object to be cut by the cutting system 100. In one example, the cutting system 100 cuts the workpieces 5 so as to manufacture artificial teeth. Target objects to be manufactured by the cutting system 100, however, are not limited to artificial teeth. As illustrated in FIG. 2, each workpiece 5 according to the present embodiment has a circular shape. Each workpiece 5, however, may have any other shape. In one example, each workpiece 5 may have a rectangular shape. The workpieces 5 are made of any of various materials, such as zirconia, wax, polymethyl methacrylate (PMMA) resin, hybrid resin, polyether ether ketone (PEEK) resin, and gypsum. When zirconia is selected as a material for the workpieces 5, semi-sintered zirconia, for example, is preferably used. A material for the workpieces 5 is not limited to any particular material.

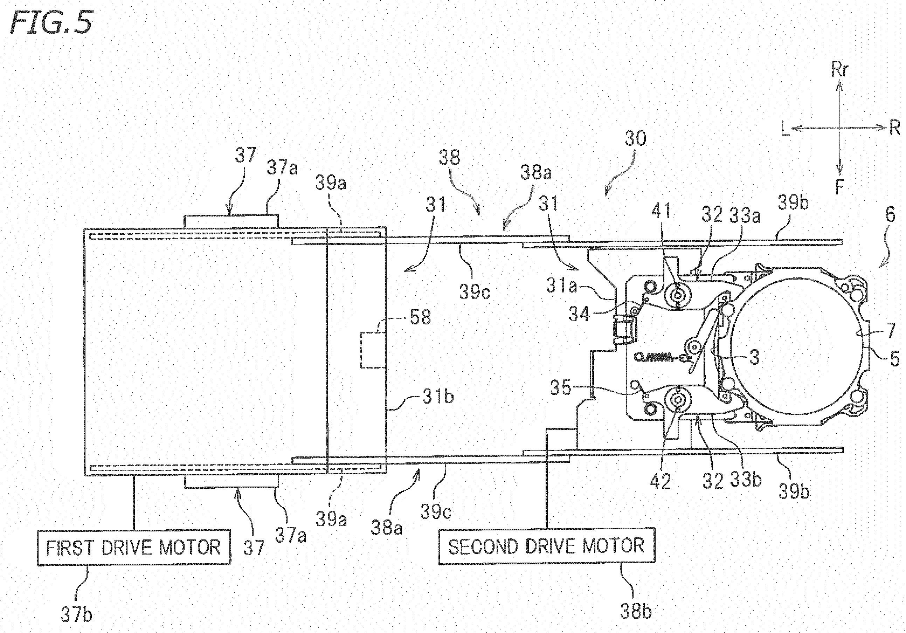

In the present embodiment, each adapter 6 is attached to an associated one of the workpieces 5 as illustrated in FIG. 2. The adapter 6 is grasped by a grasper 32 (see FIG. 5) of a workpiece conveyor 30 (which will be described below) when the cutting system 100 retains the workpiece 5. Each workpiece 5 having the associated adapter 6 attached thereto is contained in a workpiece container 10 (which will be described below) of the cutting system 100 and is to be cut by the cutting system 100. The shape of each adapter 6, for example, is not limited to any particular shape. In the present embodiment, each adapter 6 is provided in its center with an insertion hole 7. Inserting each workpiece 5 into the insertion hole 7 of the associated adapter 6 secures the workpiece 5 to the associated adapter 6. In the following description, the term "workpiece 5" refers to the workpiece 5 having the associated adapter 6 attached thereto. Thus, each workpiece 5 includes the adapter 6 attached thereto.

The present embodiment involves assigning identifiers to the workpieces 5 so as to distinguish each workpiece 5 from the others. The identifiers are used to identify the workpieces 5. The identifiers assigned to the workpieces 5 are different from each other. In one example, the identifiers are numerals or characters, such as machining program numbers. The identifiers, however, are not limited to numerals or characters. In the present embodiment, each adapter 6 attached to the associated workpiece 5 is provided with a storage 3. The storages 3 store the identifiers. In the present embodiment, the identifier stored in each storage 3 is a bar code (e.g., a one-dimensional code). The identifier stored in each storage 3, however, is not limited to a bar code. Each storage 3 may store a two-dimensional code or an IC tag, for example.

As illustrated in FIG. 1, the cutting system 100 according to the present embodiment includes the workpiece container 10, the workpiece conveyor 30 (see FIG. 5), a cutting apparatus 60, a controller 110, and the cutting notification apparatus 130. The workpiece container 10, the workpiece conveyor 30, the cutting apparatus 60, the controller 110, and the cutting notification apparatus 130 will be described in this order below.

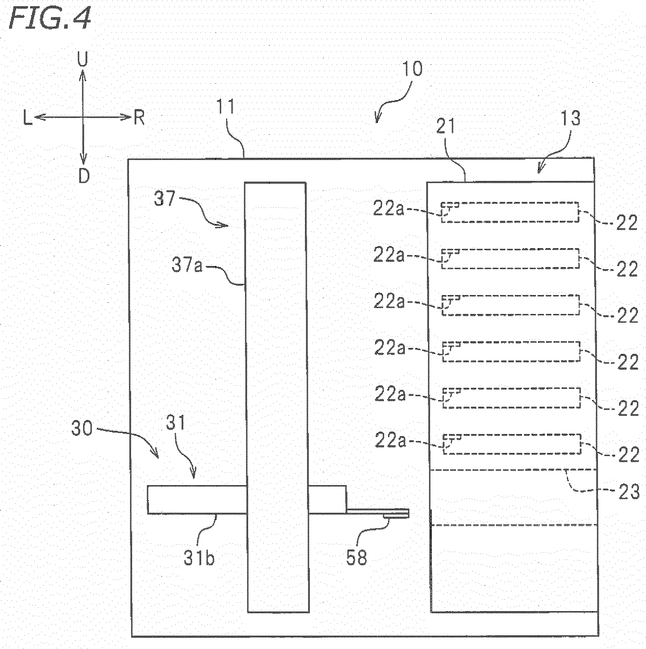

FIG. 3 is a perspective view of the cutting system 100, with a door 12 of the workpiece container 10 opened. As illustrated in FIG. 3, the workpiece container 10 according to the present embodiment contains the workpieces 5. One of the workpieces 5 contained in the workpiece container 10 is selected and conveyed to the cutting apparatus 60 by the workpiece conveyor 30 illustrated in FIG. 4. The workpiece container 10 functions as a "workpiece changer". The structure of the workpiece container 10, for example, is not limited to any particular structure. In the present embodiment, the workpiece container 10 has a box shape. The workpiece container 10 includes a case body 11, the door 12, and a holder 13.

The case body 11 has a box shape. The case body 11 includes an inner space. The holder 13 capable of holding the workpieces 5 is disposed in the inner space of the case body 11. In the present embodiment, the front portion of the case body 11 is provided with an opening 17. The opening 17 provides communication between the inner space of the case body 11 and outside of the case body 11.

The door 12 is provided on the case body 11 such that the door 12 opens and closes the opening 17 at the front portion of the case body 11. In the present embodiment, the door 12 is a plate member. In one example, the door 12 is supported by the case body 11 such that the door 12 is rotatable around its right end. As illustrated in FIG. 1, the door 12 is provided with a support protrusion 12a extending rightward from the right portion of the door 12. The support protrusion 12a is supported by the case body 11. In the present embodiment, the door 12 is rotated around the support protrusion 12a so as to open or close the opening 17 of the case body 11 (see FIGS. 1 and 3). The door 12 may be provided with a lock mechanism to lock movement of the door 12 relative to the case body 11, with the opening 17 opened by the door 12. The door 12 is movable such that the door 12 opens and closes the opening 17 during cutting performed by the cutting apparatus 60. Alternatively, with the opening 17 closed by the door 12, the door 12 may be locked during cutting performed by the cutting apparatus 60.

The holder 13 holds the workpieces 5. In the present embodiment, the holder 13 is provided on the door 12. The holder 13 moves in conjunction with movement of the door 12. With the opening 17 closed by the door 12, the holder 13 is contained in the inner space of the case body 11. The holder 13, however, may be simply disposed in the inner space of the case body 11 without being provided on the door 12. In the present embodiment, the holder 13 includes a holder body 21 and a plurality of sub-holders 22. The holder body 21 has a box shape extending in the up-down direction. In the present embodiment, the upper end of the holder body 21 and the upper end of the door 12 are connected to each other through an upper connecting plate 26. The lower end of the holder body 21 and the lower end of the door 12 are connected to each other through a lower connecting plate 27. In the present embodiment, the holder body 21 is rotated together with the door 12 when the door 12 is rotated around the support protrusion 12a (see FIG. 1).

Each of the sub-holders 22 holds an associated one of the workpieces 5 having the associated adapter 6 (see FIG. 2) attached thereto. The sub-holders 22 are provided on the holder body 21. The sub-holders 22 are disposed one above another in the up-down direction. Each sub-holder 22 includes an inner space. Each workpiece 5 is held in the inner space of the associated sub-holder 22. In one example, the inner peripheral surface of each sub-holder 22 defining the inner space thereof has a shape conforming to the shape of the associated adapter 6. Each of the workpieces 5 is held in an associated one of the sub-holders 22. In the present embodiment, the number of sub-holders 22 is six. Thus, the number of workpieces 5 that may be held in the holder 13 is six. The number of sub-holders 22, however, is not limited to any particular number. The locations at which the sub-holders 22 are disposed are not limited to any particular locations. In one example, some of the sub-holders 22 may be disposed side by side in the right-left direction. In the present embodiment, with the opening 17 of the case body 11 closed by the door 12, the inner space of each sub-holder 22 is open leftward. With the opening 17 opened by the door 12, the inner space of each sub-holder 22 is open forward.

FIG. 4 is a front view of the holder 13, schematically illustrating the positional relationship between the holder 13 and a first conveying mechanism 37 of the workpiece conveyor 30. As illustrated in FIG. 4, each sub-holder 22 is provided with a sensor 22a. The sensors 22a are used to determine whether the workpieces 5 are held in the sub-holders 22. The sensors 22a are not limited to any particular type of sensor. In one example, the sensors 22a may each be a microswitch or a photoelectric sensor.

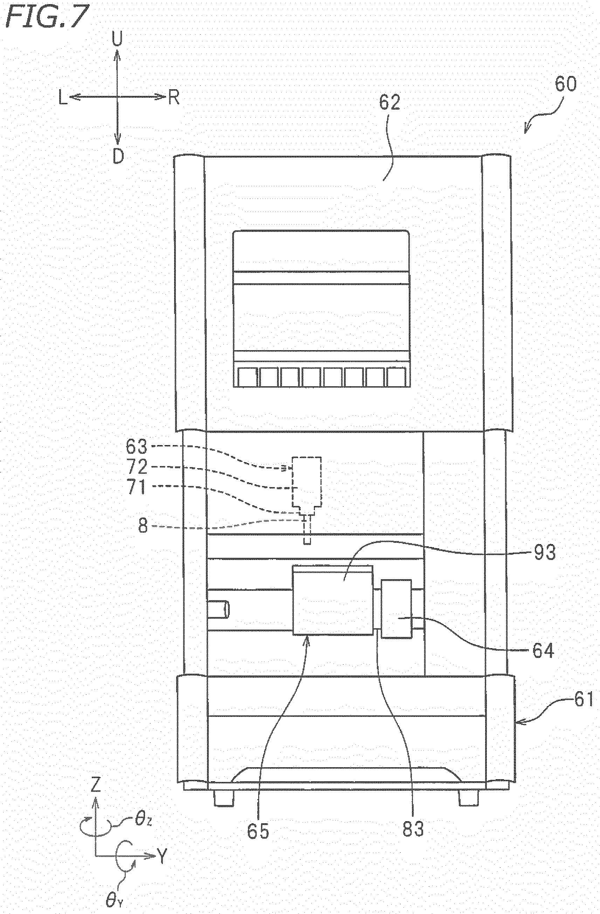

In the present embodiment, a conveyance hole 23 is provided in a portion of the holder body 21 located below the lowermost sub-holder 22 as illustrated in FIG. 3. When the workpiece 5 held in the associated sub-holder 22 is conveyed to the cutting apparatus 60 by the workpiece conveyor 30, the workpiece 5 passes through the conveyance hole 23. The conveyance hole 23 provides communication between the inner space of the case body 11 and the inner space of a case body 61 (see FIG. 7) of the cutting apparatus 60. The case body 61 will be described below. The shape of the conveyance hole 23 is not limited to any particular shape. In the present embodiment, the conveyance hole 23 has a rectangular shape, for example. The location at which the conveyance hole 23 is provided is not limited to any particular location. Alternatively, the conveyance hole 23 may be provided in a portion of the holder body 21 located between the sub-holders 22.

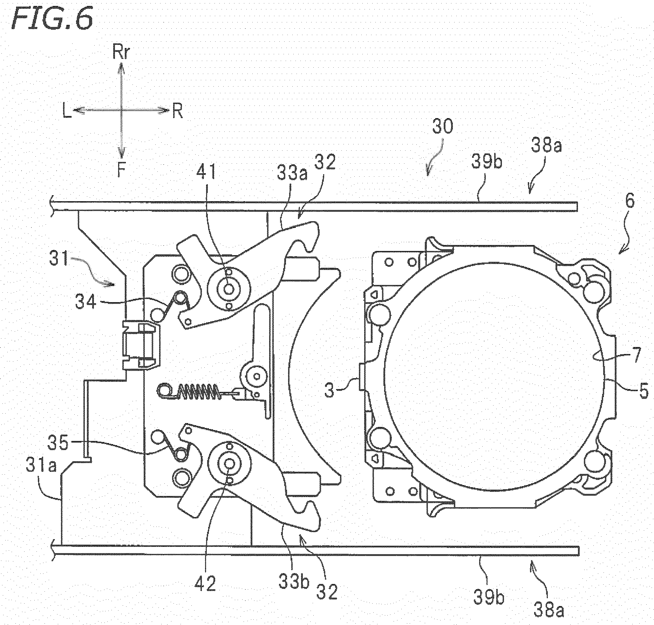

The workpiece conveyor 30 will be described below. FIG. 5 is a plan view of the workpiece conveyor 30, with the workpiece 5 grasped by the grasper 32. FIG. 6 is a plan view of the workpiece conveyor 30, with the workpiece 5 not grasped by the grasper 32. The workpiece conveyor 30 selects one of the workpieces 5 held in the holder 13 of the workpiece container 10 and conveys the selected workpiece 5 to the cutting apparatus 60. In other words, the workpiece conveyor 30 removes, from the holder 13, one of the workpieces 5 held in the sub-holders 22 of the holder 13 and conveys the removed workpiece 5 to the cutting apparatus 60. The workpiece conveyor 30 also conveys the workpiece 5 such that the workpiece 5 is held in the associated sub-holder 22 of the holder 13. As illustrated in FIG. 4, the workpiece conveyor 30 is disposed in the inner space of the case body 11. The structure of the workpiece conveyor 30 is not limited to any particular structure. As illustrated in FIG. 5, the workpiece conveyor 30 according to the present embodiment includes a conveyance body 31, the grasper 32, the first conveying mechanism 37, and a second conveying mechanism 38.

As illustrated in FIG. 4, the conveyance body 31 is disposed in the case body 11. As illustrated in FIG. 5, the grasper 32 grasps the workpiece 5 having the associated adapter 6 attached thereto. In the present embodiment, the grasper 32 includes a first hook 33a, a second hook 33b, a first spring 34, and a second spring 35. The grasper 32 grasps the workpiece 5 by catching the workpiece 5 between the first hook 33a and the second hook 33b. The first hook 33a and the second hook 33b are provided on the conveyance body 31. In the present embodiment, the conveyance body 31 includes a first conveyance body 31a having a plate shape. The first conveyance body 31a is movable in the right-left direction. The first hook 33a and the second hook 33b are disposed on the upper surface of the first conveyance body 31a. The first hook 33a and the second hook 33b are disposed such that the first hook 33a and the second hook 33b face each other in the front-rear direction. In the present embodiment, the first conveyance body 31a is provided with a first shaft 41 and a second shaft 42 that extend upward. The first shaft 41 and the second shaft 42 face each other in the front-rear direction. The first hook 33a is supported by the first shaft 41 and rotatable around the first shaft 41. The second hook 33b is supported by the second shaft 42 and rotatable around the second shaft 42.

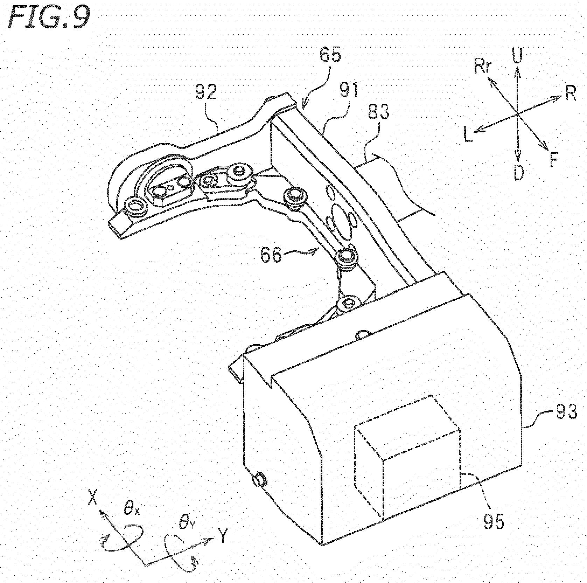

The first spring 34 applies an elastic force to the first hook 33a. In the present embodiment, when the first hook 33a and the second hook 33b grasp the workpiece 5 therebetween, the first spring 34 applies an elastic force to the first hook 33a in a direction in which an end of the first hook 33a (i.e., the right end of the first hook 33a in FIG. 5) moves toward the second hook 33b. The second spring 35 applies an elastic force to the second hook 33b. In the present embodiment, when the first hook 33a and the second hook 33b grasp the workpiece 5 therebetween, the second spring 35 applies an elastic force to the second hook 33b in a direction in which an end of the second hook 33b (i.e., the right end of the second hook 33b in FIG. 5) moves toward the first hook 33a. With the workpiece 5 secured to a clamp 66 (see FIG. 9) and grasped between the first hook 33a and the second hook 33b, pressing the first hook 33a and the second hook 33b to the workpiece 5 (i.e., rightward in FIG. 5) causes the ends of the first hook 33a and the second hook 33b to move outward as illustrated in FIG. 6. The clamp 66 will be described below. In the state illustrated in FIG. 6, the first spring 34 applies no elastic force that causes the first hook 33a to move toward the second hook 33b, and the second spring 35 applies no elastic force that causes the second hook 33b to move toward the first hook 33a. This releases the grasping of the workpiece 5 by the first hook 33a and the second hook 33b. As described above, the grasper 32 according to the present embodiment is configured to grasp the workpiece 5 between the first hook 33a and the second hook 33b using the elastic forces of the first spring 34 and the second spring 35. Alternatively, the grasper 32 may be configured to grasp the workpiece 5 between the first hook 33a and the second hook 33b by electrical control.

As illustrated in FIG. 4, the first conveying mechanism 37 conveys the conveyance body 31 and the grasper 32 (or more specifically, the first hook 33a and the second hook 33b) in the up-down direction inside the inner space of the case body 11 of the workpiece container 10. The specific structure of the first conveying mechanism 37 is not limited to any particular structure. As illustrated in FIG. 5, the first conveying mechanism 37 includes a pair of first rails 37a and a first drive motor 37b. The first rails 37a are disposed such that the first rails 37a face each other in the front-rear direction inside the case body 11. As illustrated in FIG. 4, the first rails 37a extend in the up-down direction such that the first rails 37a face the holder 13 of the workpiece container 10 in the right-left direction. As illustrated in FIG. 5, the conveyance body 31 is slidable along the first rails 37a. The conveyance body 31 is disposed between the first rails 37a. The first drive motor 37b serves to move the conveyance body 31 and the grasper 32 in the up-down direction. In the present embodiment, the first drive motor 37b is connected to the conveyance body 31. The first drive motor 37b causes the conveyance body 31 to move along the first rails 37a in the up-down direction so as to move the grasper 32 in the up-down direction.

The second conveying mechanism 38 conveys the workpiece 5 grasped by the grasper 32 to the cutting apparatus 60. In the present embodiment, the second conveying mechanism 38 conveys the first conveyance body 31a and the grasper 32 in the right-left direction. The second conveying mechanism 38 conveys the workpiece 5 to the cutting apparatus 60 through the conveyance hole 23 (see FIG. 3) provided in the holder body 21 of the holder 13. The specific structure of the second conveying mechanism 38 is not limited to any particular structure. As illustrated in FIG. 5, the second conveying mechanism 38 according to the present embodiment includes a pair of second rails 38a and a second drive motor 38b. The second rails 38a are extendable and contractible. The second rails 38a are extendable in the right-left direction. The second rails 38a are disposed such that the second rails 38a face each other in the front-rear direction. In the present embodiment, each of the second rails 38a includes a secured rail 39a, a movable rail 39b, and an intermediate rail 39c. In the present embodiment, the conveyance body 31 includes a second conveyance body 31b having a box shape. The second conveyance body 31b is capable of containing the first conveyance body 31a described above. Each secured rail 39a is secured to the second conveyance body 31b. Each movable rail 39b is provided on the first conveyance body 31a. Each intermediate rail 39c serves to connect the associated secured rail 39a with the associated movable rail 39b. Each intermediate rail 39c is disposed between the associated secured rail 39a and the associated movable rail 39b. Each intermediate rail 39c is slidable along the associated secured rail 39a and the associated movable rail 39b.

The second drive motor 38b causes the first conveyance body 31a of the conveyance body 31 and the grasper 32 (or more specifically, the first hook 33a and the second hook 33b) to move in the right-left direction. In one example, the second drive motor 38b is connected to the first conveyance body 31a. Alternatively, the second drive motor 38b may be connected to either one of the second rails 38a. In the present embodiment, driving the second drive motor 38b results in a change in the distance between each secured rail 39a and the associated movable rail 39b. In one example, the distance between each secured rail 39a and the associated movable rail 39b is increased, so that the first conveyance body 31a on which the movable rails 39b are provided and the workpiece 5 grasped by the grasper 32 are conveyed to the cutting apparatus 60 through the conveyance hole 23. When the distance between each secured rail 39a and the associated movable rail 39b is reduced such that each secured rail 39a is overlapped with the associated movable rail 39b in the front-rear direction, the first conveyance body 31a and the grasper 32 are contained in the second conveyance body 31b.

In the present embodiment, the workpiece conveyor 30 includes a reader 58. The reader 58 reads the identifier stored in the storage 3 (see FIG. 2) of each adapter 6 attached to the associated workpiece 5. In the present embodiment, the reader 58 is a noncontact reader. The reader 58 passes through a region adjacent to the storages 3 so as to read the identifiers stored in the storages 3. Alternatively, the reader 58 may be configured to come into contact with the storages 3 so as to read the identifiers stored in the storages 3. In other words, the reader 58 may be a "contact type" reader. As illustrated in FIG. 4, the reader 58 is provided on the conveyance body 31. Specifically, the reader 58 is provided on the second conveyance body 31b. Alternatively, the reader 58 may be provided on the first conveyance body 31a. In the present embodiment, with the first conveyance body 31a contained in the second conveyance body 31b, the conveyance body 31 moves in the up-down direction along the first rails 37a. This enables the reader 58 to read the identifiers stored in the storages 3 of the workpieces 5 held in the sub-holders 22.

The cutting apparatus 60 will be described below. As illustrated in FIG. 1, the cutting apparatus 60 according to the present embodiment cuts the workpiece 5 conveyed to the cutting apparatus 60 by the workpiece conveyor 30. In the present embodiment, the cutting apparatus 60 is integral with the workpiece container 10. Alternatively, the cutting apparatus 60 may be separate from the workpiece container 10. The cutting apparatus 60 has a box shape. A portion of the cutting apparatus 60 is in communication with the workpiece container 10. The structure of the cutting apparatus 60 is not limited to any particular structure.

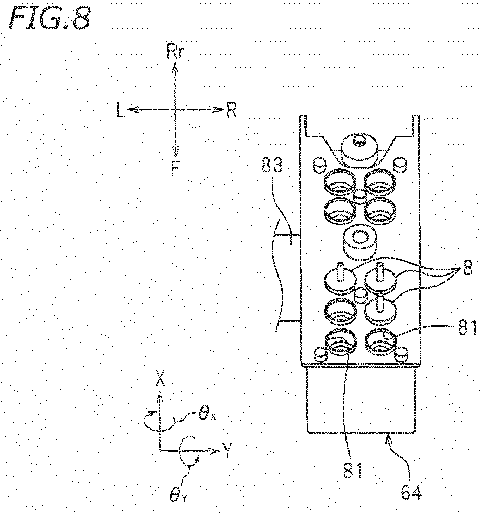

FIG. 7 is a front view of the cutting apparatus 60. FIG. 7 illustrates the cutting apparatus 60, with its cover 62 opened. In FIG. 7, the workpiece container 10 is not illustrated. FIG. 8 is a perspective view of a tool magazine 64. FIG. 9 is a perspective view of a rotary supporting member 65 and the clamp 66. As illustrated in FIG. 7, the cutting apparatus 60 according to the present embodiment includes the case body 61, the cover 62, a spindle 63, the tool magazine 64, the rotary supporting member 65, and the clamp 66 (see FIG. 9). The case body 61 has a box shape. The case body 61 includes an inner space. The case body 61 is provided at its front portion with an opening. The cover 62 is supported by the case body 61 such that the cover 62 opens and closes the opening of the case body 61.

The spindle 63 rotates a machining tool 8 so as to cut the workpiece 5 using the machining tool 8. The spindle 63 includes a tool grasper 71 and a rotary portion 72. The tool grasper 71 grasps the upper end of the machining tool 8. In the present embodiment, the rotary portion 72 is provided on the upper end of the tool grasper 71.

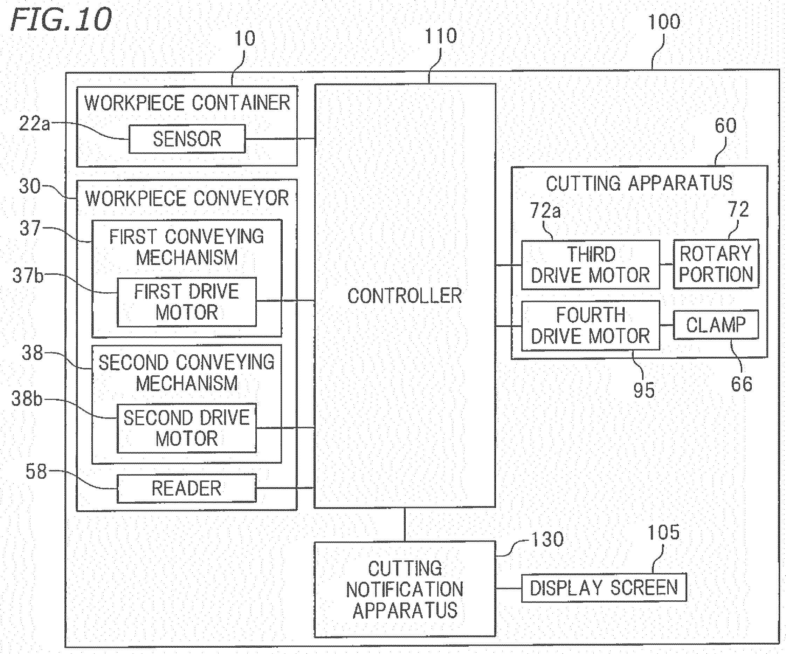

The rotary portion 72 rotates the machining tool 8 grasped by the tool grasper 71. The rotary portion 72 extends in the up-down direction. In the present embodiment, the rotary portion 72 is connected with a third drive motor 72a (see FIG. 10). Driving the third drive motor 72a enables the rotary portion 72 to rotate in the rotational direction θz around the Z axis. The rotation of the rotary portion 72 causes the machining tool 8 grasped by the tool grasper 71 to rotate in the rotational direction θz around the Z axis. The rotary portion 72 is configured to be moved in the right-left direction and the up-down direction by a first drive member (not illustrated).

As illustrated in FIG. 8, the tool magazine 64 is capable of holding a plurality of machining tools 8. In the present embodiment, the tool magazine 64 has a box shape. The upper surface of the tool magazine 64 is provided with a plurality of holes 81 to hold the machining tools 8. Each machining tool 8 is inserted into an associated one of the holes 81 such that the upper portion of each machining tool 8 is exposed. Replacement of the machining tool 8 involves: returning the machining tool 8 grasped by the tool grasper 71 to the associated hole 81; moving the tool grasper 71 and the rotary portion 72 to a position above the machining tool 8 to be used next; and causing the tool grasper 71 to grasp the upper end of the machining tool 8 located below the tool grasper 71.

The tool magazine 64 is provided with a rotation shaft 83. The rotation shaft 83 supports the rotary supporting member 65 (see FIG. 9) such that the rotary supporting member 65 is rotatable. The rotation shaft 83 extends in the right-left direction. As illustrated in FIG. 9, the rotation shaft 83 is coupled to the rotary supporting member 65. Although not illustrated, the tool magazine 64 is provided with a second drive member. The rotation shaft 83 is rotatable in the rotational direction θy around the Y axis by the second drive member. The rotation of the rotation shaft 83 in the rotational direction θy around the Y axis causes the rotary supporting member 65 to rotate in the rotational direction θy around the Y axis.

The rotary supporting member 65 supports the clamp 66 such that the clamp 66 is rotatable. The rotary supporting member 65 is substantially U-shaped in a plan view. The rotary supporting member 65 is coupled to the rotation shaft 83. The rotary supporting member 65 includes: a first portion 91 extending in the front-rear direction; a second portion 92 extending leftward from the rear end of the first portion 91; and a third portion 93 extending leftward from the front end of the first portion 91. The clamp 66 is rotatably supported by the second portion 92 and the third portion 93. The third portion 93 is provided with a fourth drive motor 95 to rotate the clamp 66 in the rotational direction θx around the X axis.

The clamp 66 is a member to retain the workpiece 5 to be cut. In one example, the clamp 66 has a shape conforming to the shape of a portion of each adapter 6 (see FIG. 2) attached to the associated workpiece 5. The clamp 66 is substantially C-shaped in the plan view. The clamp 66 retains the workpiece 5 that has been conveyed to the cutting apparatus 60 by the workpiece conveyor 30. In the present embodiment, the cutting apparatus 60 cuts the workpiece 5 retained by the clamp 66.

The controller 110 will be described below. FIG. 10 is a block diagram of the cutting system 100. The controller 110 controls conveyance of the workpieces 5 and cutting performed on the workpieces 5. The controller 110 includes a microcomputer. The controller 110 is provided in the cutting system 100. In one example, the controller 110 may be provided in the case body 11 of the workpiece container 10 or may be provided in the case body 61 of the cutting apparatus 60. The controller 110 includes a central processing unit (CPU), a read-only memory (ROM) storing, for example, a program to be executed by the CPU, and a random-access memory (RAM). In the present embodiment, the controller 110 controls conveyance of the workpieces 5 and cutting performed on the workpieces 5 using the program stored in the microcomputer. As used herein, the term "program" refers to "firmware".

As illustrated in FIG. 10, the controller 110 according to the present embodiment is electrically connected to the workpiece container 10, the workpiece conveyor 30, and the cutting apparatus 60. Thus, the controller 110 controls the workpiece container 10, the workpiece conveyor 30, and the cutting apparatus 60. Specifically, the controller 110 is electrically connected to the sensors 22a of the workpiece container 10. When the workpiece 5 is held in the associated sub-holder 22, the controller 110 receives, from the sensor 22a, a signal indicative of this condition. When the workpiece 5 is removed from the associated sub-holder 22, the controller 110 receives, from the sensor 22a, a signal indicative of this removal.

The controller 110 is electrically connected to the following components of the workpiece conveyor 30: the first drive motor 37b of the first conveying mechanism 37; the second drive motor 38b of the second conveying mechanism 38; and the reader 58. The controller 110 controls driving of the first drive motor 37b so as to control movement of the conveyance body 31 and the grasper 32 in the up-down direction. The controller 110 controls driving of the second drive motor 38b so as to control movement of the conveyance body 31 and the grasper 32 in the right-left direction. When the identifier stored in the storage 3 of each workpiece 5 held in the associated sub-holder 22 is read by the reader 58, the controller 110 receives information on the identifier from the reader 58.

The controller 110 is electrically connected to the third drive motor 72a and the fourth drive motor 95 of the cutting apparatus 60. The controller 110 controls driving of the third drive motor 72a so as to control rotation of the rotary portion 72 of the spindle 63. Although not illustrated, the controller 110 is able to exercise control to cause the rotary portion 72 to move in the right-left direction and the up-down direction. The controller 110 controls driving of the fourth drive motor 95 so as to control rotation of the clamp 66 in the rotational direction θx around the X axis, Although not illustrated, the controller 110 is able to exercise control to cause the rotation shaft 83 (see FIG. 9) to rotate in the rotational direction θy around the Y axis.

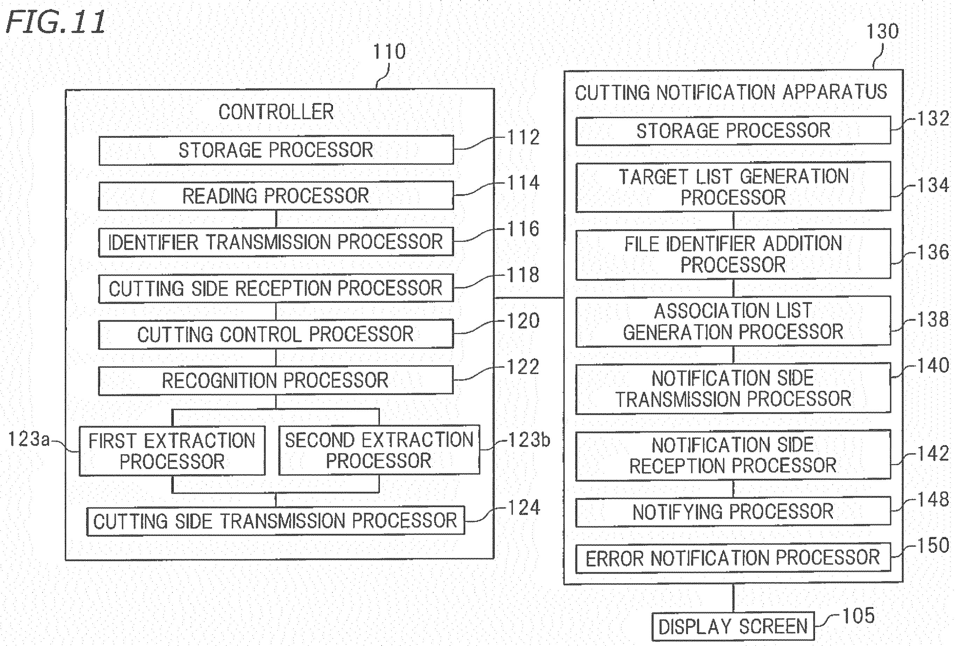

FIG. 11 is a block diagram of the controller 110 and the cutting notification apparatus 130. As illustrated in FIG. 11, the controller 110 according to the present embodiment includes a storage processor 112, a reading processor 114, an identifier transmission processor 116, a cutting side reception processor 118, a cutting control processor 120, a recognition processor 122, a first extraction processor 123a, a second extraction processor 123b, and a cutting side transmission processor 124. The functions of these processors are implemented by a program. The functions of these processors may be implemented by circuit(s), for example. The specific functions of these processors will be described below.

The cutting notification apparatus 130 will be described below. While the cutting apparatus 60 cuts the workpieces 5, the cutting notification apparatus 130 notifies the user of which of the workpieces 5 held in the holder 13 of the workpiece container 10 has finished being cut and which of the workpieces 5 held in the holder 13 of the workpiece container 10 is yet to be cut. In other words, the cutting notification apparatus 130 notifies, during cutting, the user of whether each of the workpieces 5 held in the holder 13 has finished being cut. The cutting notification apparatus 130 is a computer including a central processing unit (CPU), a read-only memory (ROM) storing, for example, a program to be executed by the CPU, and a random-access memory (RAM). In the present embodiment, the cutting notification apparatus 130 is separate from the workpiece container 10, the workpiece conveyor 30, and the cutting apparatus 60. Alternatively, the cutting notification apparatus 130 may be integral with at least one of the workpiece container 10, the workpiece conveyor 30, and the cutting apparatus 60. In the present embodiment, the cutting notification apparatus 130 is provided by a general-purpose computer, such as a personal computer.

The cutting notification apparatus 130 is electrically connected to the controller 110. The cutting notification apparatus 130 may be connected to the controller 110 such that the cutting notification apparatus 130 is communicable with the controller 110 through wire. The cutting notification apparatus 130 may be connected to the controller 110 such that the cutting notification apparatus 130 is wirelessly communicable with the controller 110.

In the present embodiment, the cutting notification apparatus 130 includes a storage processor 132, a target list generation processor 134, a file identifier addition processor 136, an association list generation processor 138, a notification side transmission processor 140, a notification side reception processor 142, a notifying processor 148, and an error notification processor 150. The functions of these processors are implemented by a program. The program is read from a storage medium, such as a CD or a DVD, for example. Alternatively, the program may be downloaded through the Internet. The functions of these processors may be implemented by circuit(s), for example. The specific functions of these processors will be described below.

The cutting system 100 automatically cuts the workpieces 5 using the machining tools 8 in accordance with machining programs so as to manufacture a plurality of desired products. Each machining program is "NC data" or "NC program". As used herein, the term "machining program" refers to a program storing a plurality of machining processes that define, using coordinate values, operations of the grasper 32 (see FIG. 5) of the workpiece conveyor 30, operations of the spindle 63 (see FIG. 7) of the cutting apparatus 60, and operations of the clamp 66 (see FIG. 9) that retains the workpiece 5. In short, each machining program includes a plurality of machining processes. In accordance with the machining processes, the controller 110 controls the operations of the grasper 32 of the workpiece conveyor 30, the operations of the spindle 63 of the cutting apparatus 60, and the operations of the clamp 66. Thus, the cutting system 100 cuts the workpieces 5 with the machining tools 8 while changing the target to be cut from one workpiece 5 to another, Consequently, the cutting system 100 manufactures a plurality of desired products.

In the present embodiment, each machining program is stored in an associated one of machining files. The number of workpieces 5 to be cut in accordance with the machining program stored in a single machining file is not limited to any particular number, In one example, the machining program to cut the single workpiece 5 may be stored in a single machining file. In another example, the machining program to cut the workpieces 5 may be stored in a single machining file. In still another example, the machining program to cut the single workpiece 5 may be stored in a plurality of machining files.

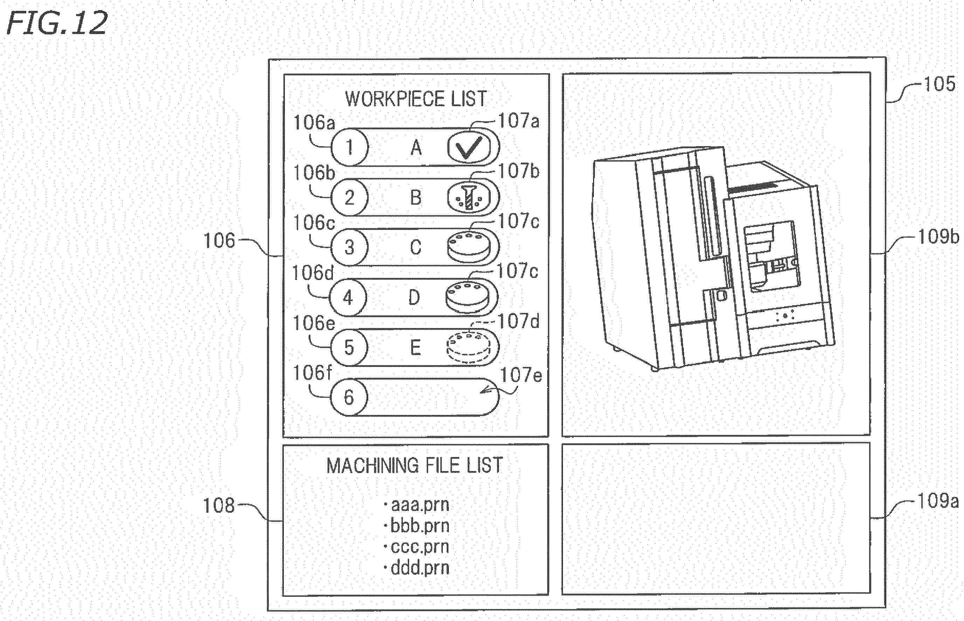

FIG. 12 is a diagram illustrating the display screen 105. As illustrated in FIG. 12, the cutting system 100 according to the present embodiment includes the display screen 105. The display screen 105 presents information on the cutting system 100 and information on cutting, for example. The display screen 105 is not limited to any particular type of display screen. In one example, the display screen 105 is a display, such as a liquid crystal display, separate from the cutting apparatus 60. Alternatively, the display screen 105 may be a panel disposed on the case body 11 of the workpiece container 10 or the case body 61 of the cutting apparatus 60.

In the present embodiment, the display screen 105 includes a workpiece state display portion 106, a machining file list display portion 108, a machining information display portion 109a, and a model display portion 109b. The workpiece state display portion 106 presents the state of each workpiece 5 held in the associated sub-holder 22 (see FIG. 3) of the holder 13 of the workpiece container 10. As previously mentioned, the holder 13 is provided with the six sub-holders 22. As illustrated in FIG. 12, the workpiece state display portion 106 presents Numbers 1 to 6 assigned to the six sub-holders 22. In the example illustrated in FIG. 12, Number 1 is assigned to the uppermost sub-holder 22 and Number 6 is assigned to the lowermost sub-holder 22. In this example, the reference signs 106a to 106f represent the states of the workpieces 5 held in the six sub-holders 22. In the present embodiment, the workpiece states 106a to 106f may each be presented in the form of any one of the following states: a cutting-finished state 107a; a cutting-in-progress state 107b; a pre-cutting state 107c; a target identifier-less state 107d; and a workpiece-less state 107e. The cutting-finished state 107a indicates that the workpiece 5 in the sub-holder 22 has finished being cut. The cutting-in-progress state 107b indicates that the workpiece 5, which has been held in the sub-holder 22, is being cut. The pre-cutting state 107c indicates that the workpiece 5 held in the sub-holder 22 is yet to be cut. The target identifier-less state 107d indicates that the workpiece 5 is held in the sub-holder 22 but the identifier of the workpiece 5 is not included in target identifiers in a target list (which will be described below). In other words, the target identifier-less state 107d indicates that the identifier of the workpiece 5 is not identical to the associated target identifier designated by the machining program to be executed. The workpiece-less state 107e indicates that the workpiece 5 is not held in the sub-holder 22.

The machining file list display portion 108 presents a list of machining files to be executed. In the example illustrated in FIG. 12, the machining file list display portion 108 presents the following machining files to be executed: "aaa.prn"; "bbb.prn"; "ccc.prn"; and "ddd.prn". In the present embodiment, the machining programs stored in the machining files are sequentially executed from the uppermost one. The machining information display portion 109a presents information on cutting. Although not illustrated, the machining information display portion 109a presents, for example, information indicating whether the cutting apparatus 60 is performing cutting, information on the machining tool 8 being used, and the number of revolutions of the spindle 63 (see FIG. 7). The model display portion 109b presents the models of the workpiece container 10, the workpiece conveyor 30, and the cutting apparatus 60 that are being currently used. Suppose that a plurality of the workpiece containers 10, a plurality of the workpiece conveyors 30, and a plurality of the cutting apparatuses 60 are connected to the cutting notification apparatus 130. In this case, the workpiece container 10, the workpiece conveyor 30, and the cutting apparatus 60 that are to be used are selected and presented on the model display portion 109b.

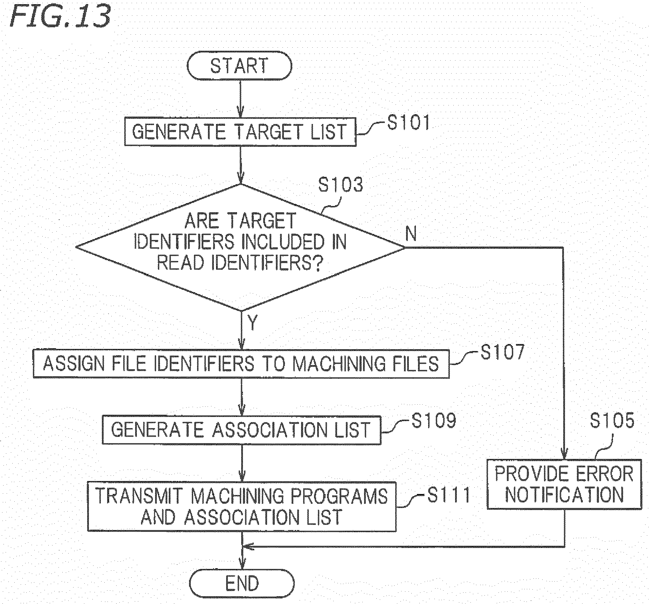

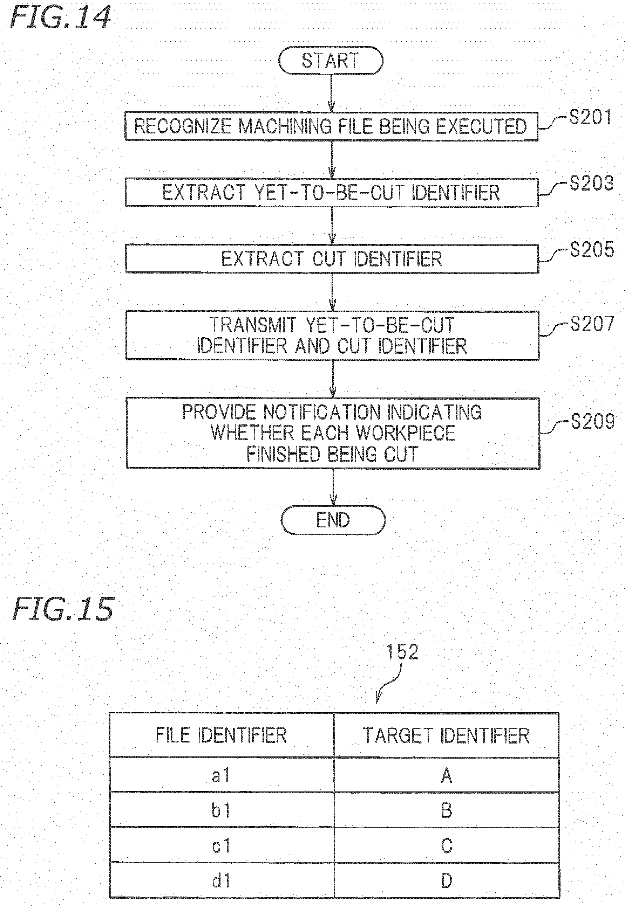

FIG. 13 is a flow chart illustrating a control procedure to be performed by the cutting system 100 before start of cutting. FIG. 14 is a flow chart illustrating a procedure for notifying, during cutting, the user of whether each of the workpieces 5 held in the holder 13 has finished being cut. The procedure for notifying, during cutting, the user of whether each of the workpieces 5 held in the associated sub-holder 22 of the holder 13 has finished being cut will be described below with reference to the flow charts of FIGS. 13 and 14. The following description is based on the assumption that as illustrated in FIG. 12, the machining files "aaa.prn", "bbb.prn", "ccc.prn", and "ddd.prn" are designated as the machining files to be executed. In this example, the machining program to cut the workpiece 5 having an identifier A is stored in the machining file "aaa.prn", the machining program to cut the workpiece 5 having an identifier B is stored in the machining file "bbb.prn", the machining program to cut the workpiece 5 having an identifier C is stored in the machining file "ccc.prn", and the machining program to cut the workpiece 5 having an identifier D is stored in the machining file "ddd.prn". In the present embodiment, the machining files "aaa.prn", "bbb.prn", "ccc.prn", and "ddd.prn" to be executed are stored in advance in the storage processor 132 (see FIG. 11) of the cutting notification apparatus 130. In the example illustrated in FIG. 12, the workpieces 5 are held in the five upper ones of the six sub-holders 22 of the holder 13. In this example, the identifier A is assigned to the workpiece 5 held in the uppermost sub-holder 22, the identifier B is assigned to the workpiece 5 held in the second uppermost sub-holder 22, the identifier C is assigned to the workpiece 5 held in the third uppermost sub-holder 22, the identifier D is assigned to the workpiece 5 held in the third lowermost sub-holder 22, and the identifier E is assigned to the workpiece 5 held in the second lowermost sub-holder 22.

Before start of cutting, the present embodiment involves performing control illustrated in FIG. 13. First, in step S101 of FIG. 13, the target list generation processor 134 generates a target list. As used herein, the term "target list" refers to a list of target identifiers each designated by the machining program stored in each of the machining files to be executed. In the present embodiment, the machining processes of each machining program include a replacement command. As used herein, the term "replacement command" refers to a command to replace the workpiece 5 to be cut by the cutting apparatus 60. The workpiece 5 to be cut by the cutting apparatus 60 may hereinafter be referred to as a "target workpiece". The replacement command designates the identifier associated with the target workpiece. Executing the replacement command replaces the workpiece 5 retained by the clamp 66 (see FIG. 9) of the cutting apparatus 60 with the workpiece 5 having the identifier designated by the replacement command. In the present embodiment, when each workpiece 5 is cut in accordance with the machining program stored in the single machining file, the replacement command is a command designated in the first machining process of the machining program stored in each machining file.

In step S101 of FIG. 13, the target list generation processor 134 first extracts the replacement commands from the machining programs that are included in the machining files stored in the storage processor 132 of the cutting notification apparatus 130 and that are to be executed. In the present embodiment, the target list generation processor 134 extracts the replacement commands designated in the first machining processes of the machining programs stored in the machining files to be executed. The target list generation processor 134 then extracts the target identifiers designated by the replacement commands extracted by the target list generation processor 134. The target list generation processor 134 subsequently generates the target list that is a list of the target identifiers extracted by the target list generation processor 134. In one example of the present embodiment, the target identifiers are the identifiers A, B, C, and D of the workpieces 5 to be cut by execution of the machining programs stored in the machining files "aaa.prn", "bbb.prn", "ccc.prn", and "ddd.prn". The target list generated by the target list generation processor 134 is stored in the storage processor 132.

Then, step S103 of FIG. 13 involves determining whether the target identifiers in the target list are included in the identifiers associated with the workpieces 5 held in the holder 13. In the present embodiment, the cutting notification apparatus 130 first transmits a reading signal to the controller 110. The reading signal is a signal that directs the controller 110 to read the identifiers stored in the storages 3 (see FIG. 2) of the workpieces 5 held in the holder 13. The reading processor 114 of the controller 110 that has received the reading signal exercises control to cause the reader 58 (see FIG. 4) to read the identifiers stored in the storages 3 of the workpieces 5 held in the holder 13. In the present embodiment, the reading processor 114 controls the first conveying mechanism 37 in order to cause the reader 58 to read the identifiers stored in the storages 3 of the workpieces 5 held in all of the sub-holders 22 of the holder 13 of the workpiece container 10. Specifically, with the first conveyor body 31a (see FIG. 5) contained in the second conveyance body 31b, the reading processor 114 controls the first drive motor 37b so as to move the conveyance body 31 along the first rails 37a as illustrated in FIG. 4. During passage of the reader 58 of the conveyance body 31 through a region adjacent to the sub-holders 22 (or more specifically, a region leftward of the sub-holders 22), the reader 58 reads the identifiers stored in the storages 3 of the workpieces 5 held in the sub-holders 22. The identifiers read by the reader 58 may hereinafter be referred to as "read identifiers". In one example of the present embodiment, the workpieces 5 are held in the five upper ones of the six sub-holders 22, and the identifiers A, B, C, D, and E of the workpieces 5 held in the five upper sub-holders 22 are the read identifiers. The read identifiers may be stored in the storage processor 112 of the controller 110.

Then, the identifier transmission processor 116 of the controller 110 transmits the read identifiers read by the reading processor 114 to the cutting notification apparatus 130. After receiving the read identifiers, the cutting notification apparatus 130 determines whether the target identifiers in the target list are included in the read identifiers. In the present embodiment, the machining program is executed when all of the target identifiers in the target list are included in the read identifiers. When all of the target identifiers in the target list are included in the read identifiers, the procedure goes to step S107. In one example of the present embodiment, the target identifiers are the identifiers A, B, C, and D, and the read identifiers are the identifiers A, B, C, D, and E. Because all of the target identifiers are included in the read identifiers in this example, the procedure goes to step S107.

When at least one of the target identifiers in the target list is not included in the read identifiers, not all of the workpieces 5 associated with the target identifiers are held in the holder 13. This makes it impossible to cut all of the workpieces 5 associated with the target identifiers. In such a case, the procedure goes to step S105. Suppose that the target identifiers are the identifiers A, B, C, and D and the read identifiers are the identifiers B, C, D, and E. In this case, the target identifier A is not included in the read identifiers, so that the procedure goes to step S105.

In the present embodiment, the target list used when the machining program is executed in the preceding round may be stored in the storage processor 132 of the cutting notification apparatus 130. The target list used in the preceding round will hereinafter be referred to as a "preliminary list". The preliminary list is changed in response to the state of the sensor 22a (see FIG. 4) of each sub-holder 22. In one example, when the workpiece 5 is removed from the sub-holder 22 by the user, for example, and the sensor 22a of the sub-holder 22 is turned OFF, the identifier associated with the workpiece 5 once held in the sub-holder 22 whose sensor 22a is turned OFF is deleted from the preliminary list.

When the preliminary list described above is stored in the storage processor 132, the cutting notification apparatus 130 may determine whether the target identifiers are included in the read identifiers in a manner described below. The cutting notification apparatus 130 first extracts differential identifiers. As used herein, the term "differential identifier" refers to an identifier that is included in the read identifiers but not included in the preliminary list. The cutting notification apparatus 130 then determines whether the target identifiers in the target list are included in the differential identifiers. When all of the target identifiers are included in the differential identifiers, the cutting notification apparatus 130 determines that all of the target identifiers are included in the read identifiers. In this case, the procedure goes to step S107. When at least one of the target identifiers is not included in the differential identifiers, the cutting notification apparatus 130 determines that at least one of the target identifiers is not included in the read identifiers, In this case, the procedure goes to step S105.

Upon determination in step S103 that at least one of the target identifiers in the target list is not included in the read identifiers, the error notification processor 150 provides an error notification in step S105. In the present embodiment, the error notification processor 150 presents an error message on the display screen 105 (see FIG. 12). Specific information indicated by the error message is not limited to any particular information. In one example, the error notification processor 150 may present, on the display screen 105, an error message indicative of the target identifier(s) in the target list that is/are not read by the reader 58. The error notification processor 150 may provide an error notification in any other specific way. In another example, the error notification processor 150 may provide an error notification by making a sound or emitting light using an LED, for example.

Upon determination in step S103 that all of the target identifiers in the target list are included in the read identifiers, the file identifier addition processor 136 assigns a file identifier to each machining file to be executed in step S107. As used herein, the term "file identifier" refers to an identifier to identify an associated one of machining files. In the present embodiment, the file identifiers assigned to the machining files are different from each other. In one example, the file identifiers are numerals or characters. The file identifiers, however, are not limited to numerals or characters. Assigning the file identifier to each machining file in this manner allows the controller 110 to easily recognize the machining program of which machining file is being executed. In one example of the present embodiment, a file identifier a1 is assigned to the machining file "aaa.prn", a file identifier b1 is assigned to the machining file "bbb.prn", a file identifier c1 is assigned to the machining file "ccc.prn", and a file identifier d1 is assigned to the machining file "ddd.prn".

The file identifiers may be assigned to the machining files in any manner. In the present embodiment, the file identifier addition processor 136 generates file identifier commands that designate the file identifiers. The file identifier addition processor 136 then adds the generated file identifier commands to the machining programs of the machining files. In the present embodiment, the file identifier addition processor 136 adds the file identifier command to the head of the machining program of each machining file, i.e., a portion of each machining program preceding the replacement command. The position at which each file identifier command is added is not limited to any particular position. The file identifier commands are not limited to any particular format. In one example, the format of the file identifier commands may be such that the controller 110 is allowed to recognize which machining file is being executed when the controller 110 executes each file identifier command.

In step S109 of FIG. 13, the association list generation processor 138 generates an association list 152 (see FIG. 15). As used herein, the term "association list" refers to a list indicating the relationship between each file identifier and the associated target identifier. Specifically, the association list 152 is a list that creates an association between each file identifier and the associated target identifier designated by the machining program in the machining file to which the file identifier command associated with the file identifier is added. The term "file identifier command associated with the file identifier" refers to a file identifier command that designates the file identifier. In one example of the present embodiment, the association list 152 illustrated in FIG. 15 creates an association between the file identifier a1 of the machining file "aaa.prn" and the target identifier A of the workpiece 5 to be cut by executing the machining program of the machining file "aaa.prn". The association list 152 illustrated in FIG. 15 also creates an association between the file identifier b1 and the target identifier B, an association between the file identifier c1 and the target identifier C, and an association between the file identifier d1 and the target identifier D.

Step S111 involves starting cutting. In step S111, the notification side transmission processor 140 transmits, to the controller 110, the machining programs of the machining files to be executed and the association list 152. In this case, the machining processes of the machining programs transmitted to the controller 110 include the file identifier commands. The file identifiers designated by the file identifier commands to be transmitted are the file identifiers in the association list 152.

After the machining programs of the machining files to be executed are transmitted from the notification side transmission processor 140, the cutting side reception processor 118 of the controller 110 receives the machining programs transmitted from the notification side transmission processor 140. Then, the cutting control processor 120 starts cutting. In the present embodiment, the cutting control processor 120 performs cutting in accordance with the machining programs received by the cutting side reception processor 118. The cutting control processor 120 controls the workpiece conveyor 30 and the cutting apparatus 60 so as to cut the workpieces 5 each provided with the storage 3 storing the identifier identical to the associated target identifier.

The processes of each of the machining programs include a process for executing the replacement command. This process will hereinafter be referred to as a "replacement command execution process". In the replacement command execution process, the cutting control processor 120 first exercises control to cause the grasper 32 (see FIG. 5) of the workpiece conveyor 30 to grasp the workpiece 5 retained by the clamp 66 (see FIG. 9). The cutting control processor 120 then controls the first conveying mechanism 37 and the second conveying mechanism 38 such that the workpiece 5 grasped by the grasper 32 is held in the sub-holder 22 that has previously held the workpiece 5. After the workpiece 5 grasped by the grasper 32 is held in the sub-holder 22, the cutting control processor 120 exercises control to cause the grasper 32 to grasp the workpiece 5 associated with the identifier designated by the replacement command. The cutting control processor 120 subsequently controls the first conveying mechanism 37 and the second conveying mechanism 38 such that the workpiece 5 associated with the identifier designated by the replacement command is conveyed to the cutting apparatus 60. After the workpiece 5 is conveyed to the cutting apparatus 60, the workpiece 5 is retained by the clamp 66. The replacement command execution process is carried out in this manner. Controlling the operations of the spindle 63 (see FIG. 7) and the clamp 66 of the cutting apparatus 60 in accordance with the subsequent process of the machining program makes it possible to cut the workpiece 5 retained by the clamp 66.

In the present embodiment, the file identifier command may be executed during execution of the machining program by the cutting control processor 120. Execution of the file identifier command involves exercising control in accordance with the flow chart illustrated in FIG. 14. The following description is based on the assumption that the machining programs of the machining files "aaa.prn", "bbb.prn", "ccc.prn", and "ddd.prn" are executed in this order and the machining program stored in the machining file "bbb.prn" is the next machining program to be executed. In this example, the machining program stored in the machining file "aaa.prn" has already been executed, so that the workpiece 5 associated the target identifier A (i.e., the workpiece 5 held in the uppermost sub-holder 22) has finished being cut.

Execution of the file identifier command first involves performing step S201 of FIG. 14. In step S201, the recognition processor 122 of the controller 110 extracts the file identifier designated by the file identifier command, and recognizes, on the basis of the file identifier extracted, the machining program of which machining file is being executed. In one example of the present embodiment, execution of the file identifier command of the machining file "bbb.prn" causes the recognition processor 122 to extract the file identifier b1 from the file identifier command so as to recognize that the machining program of the machining file "bbb.prn" is to be executed.

In step S203 of FIG. 14, the first extraction processor 123a of the controller 110 extracts a yet-to-be-cut identifier on the basis of the association list 152 (see FIG. 15). The term "yet-to-be-cut identifier" refers to a target identifier associated with the workpiece 5 that is yet to be cut. In the present embodiment, the yet-to-be-cut identifier is extracted using the association list 152 (see FIG. 15) in a manner described below. The first extraction processor 123a first extracts, from the file identifiers in the association list 152, the file identifier other than execution file identifiers that are the file identifiers of the file identifier commands executed between the start of cutting and the time of this extraction. As used herein, the term "execution file identifier" refers to the file identifier of the file identifier command to be executed next or the file identifier of the file identifier command that has already been executed. The first extraction processor 123a extracts, on the basis of the association list 152, the target identifier associated with the file identifier extracted. The target identifier extracted by the first extraction processor 123a is the yet-to-be-cut identifier. In one example of the present embodiment, the file identifiers (i.e., the execution file identifiers) of the file identifier commands executed between the start of cutting and the time of the extraction are: the file identifier a1 of the machining file "aaa.prn" storing the machining program that has already been executed; and the file identifier b1 of the machining file "bbb.prn" storing the machining program to be executed next. Thus, the first extraction processor 123a extracts, from the file identifiers a1, b1, c1, and d1 in the association list 152, the file identifiers c1 and d1 other than the execution file identifiers a1 and b1. The first extraction processor 123a then extracts, on the basis of the association list 152, the yet-to-be-cut identifiers that are the target identifiers C and D respectively associated with the extracted file identifiers c1 and d1.

In step S205 of FIG. 14, the second extraction processor 123b of the controller 110 extracts a cut identifier on the basis of the association list 152 (see FIG. 15). As used herein, the term "cut identifier" refers to the target identifier associated with the workpiece 5 that has finished being cut or the workpiece 5 that is being cut. In other words, the term "cut identifier" refers to the target identifier associated with the execution file identifier included in the file identifiers in the association list 152. To put it another way, the term "cut identifier" refers to the target identifier in the association list 152 other than the yet-to-be-cut identifiers. The second extraction processor 123b extracts the cut identifier that is the target identifier associated with the execution file identifier included in the file identifiers in the association list 152. In one example of the present embodiment, the second extraction processor 123b extracts the cut identifiers that are the target identifiers A and B respectively associated with the execution file identifiers a1 and b1, i.e., the target identifiers A and B in the association list 152 other than the yet-to-be-cut identifiers C and D.

In step S207 of FIG. 14, the cutting side transmission processor 124 of the controller 110 transmits, to the notification side reception processor 142 of the cutting notification apparatus 130, information on the yet-to-be-cut identifiers extracted by the first extraction processor 123a (which are the yet-to-be-cut identifiers C and D in one example of the present embodiment), and information on the cut identifiers extracted by the second extraction processor 123b (which are the cut identifiers A and B in one example of the present embodiment). In step S207, the cutting side transmission processor 124 may transmit the file identifier designated by the file identifier command (which is the file identifier b1 in one example of the present embodiment). The notification side reception processor 142 receives the information on the yet-to-be-cut identifiers and the information on the cut identifiers that are transmitted from the cutting side transmission processor 124. This enables the cutting notification apparatus 130 to determine whether each of the workpieces 5 has been cut on the basis of the information on the yet-to-be-cut identifiers and the information on the cut identifiers that are received by the notification side reception processor 142. The yet-to-be-cut identifiers and the cut identifiers received by the notification side reception processor 142 may be stored in the storage processor 132.

In step S209 of FIG. 14, the notifying processor 148 provides a notification that the workpiece 5 associated with the yet-to-be-cut identifier is yet to be cut. The notifying processor 148 concurrently provides a notification that the workpiece 5 associated with the cut identifier is being cut or has finished being cut. The notifying processor 148 may provide a notification in any other specific way. As illustrated in FIG. 12, the notifying processor 148 according to the present embodiment presents, on the display screen 105, information indicating that the workpiece 5 associated with the yet-to-be-cut identifier is yet to be cut. As illustrated in FIG. 12, the notifying processor 148 according to the present embodiment concurrently presents, on the display screen 105, information indicating that the workpiece 5 associated with the cut identifier is being cut or has finished being cut.

In one example of the present embodiment, the yet-to-be-cut identifiers are the target identifiers C and D. Thus, as illustrated in FIG. 12, the notifying processor 148 presents the workpiece states 106c and 106d on the display screen 105 such that each of the workpiece states 106c and 106d of the sub-holders 22 holding the workpieces 5 associated with the yet-to-be-cut identifiers C and D is the pre-cutting state 107c. In this example, the cut identifiers are the target identifiers A and B. The workpiece 5 associated with the cut identifier A has already finished being cut. The workpiece 5 associated with the cut identifier B is being cut. Thus, the notifying processor 148 presents the workpiece states 106a and 106b on the display screen 105 such that the workpiece state 106a of the sub-holder 22 holding the workpiece 5 associated with the cut identifier A is the cutting-finished state 107a, and the workpiece state 106b of the sub-holder 22 holding the workpiece 5 associated with the cut identifier B is the cutting-in-progress state 107b. In this example, the workpiece 5 associated with the read identifier E is held in the second lowermost sub-holder 22 as mentioned above. The read identifier E is not included in the target identifiers A, B, C, and D in the target list. Accordingly, the notifying processor 148 presents the workpiece state 106e on the display screen 105 such that the workpiece state 106e of the sub-holder 22 holding the workpiece 5 associated with the read identifier E is the target identifier-less state 107d. In this example, no workpiece 5 is held in the lowermost sub-holder 22. Thus, the notifying processor 148 presents the workpiece state 106f on the display screen 105 such that the workpiece state 106f of the lowermost sub-holder 22 is the workpiece-less state 107e. In the manner described above, the notifying processor 148 provides a notification indicating whether each of the workpieces 5 has finished being cut.

As described above, the present embodiment involves setting a file identifier for each of the machining files. This enables the controller 110 of the cutting system 100 to easily recognize, on the basis of the file identifier, the machining program of which machining file is being executed by the cutting apparatus 60. The present embodiment also involves generating the association list 152 (see FIG. 15) that creates an association between each file identifier and the associated target identifier designated by the machining program in the machining file to which the file identifier command associated with the file identifier is added. This clarifies the association between each file identifier and the associated target identifier. The use of the association list 152 makes it possible to easily recognize which workpiece 5 is yet to be cut and which workpiece 5 has finished being cut on the basis of the execution file identifier that is the file identifier designated by the file identifier command to be executed next or the file identifier designated by the file identifier command that has already been executed. Thus, the notifying processor 148 provides a notification indicating which workpiece 5 is yet to be cut and which workpiece 5 has finished being cut. This notification enables the user to determine, even during cutting, whether each of the workpieces 5 has finished being cut.

In one example, the user may perform an operation on the workpiece 5 that has finished being cut. In the present embodiment, the user determines whether each of the workpieces 5 has finished being cut, thus making it possible to remove, from the sub-holder 22 of the holder 13, the workpiece 5 that has finished being cut and to perform an operation on this workpiece 5. This enables the user to sequentially perform operations on the workpieces 5 without being put on standby until cutting on the workpieces 5 is finished. Consequently, the present embodiment reduces the standby time for the user.

In one example of the present embodiment, as illustrated in FIG. 12, the notifying processor 148 presents, on the display screen 105, information indicating that the workpieces 5 associated with the yet-to-be-cut identifiers C and D are yet to be cut. Specifically, the notifying processor 148 presents the workpiece states 106c and 106d on the display screen 105 such that each of the workpiece states 106c and 106d of the sub-holders 22 holding the workpieces 5 associated with the yet-to-be-cut identifiers C and D is the pre-cutting state 107c. The notifying processor 148 presents, on the display screen 105, information indicating that each of the workpieces 5 associated with the cut identifiers A and B is being cut or has finished being cut. Specifically, the notifying processor 148 presents the workpiece states 106a and 106b on the display screen 105 such that the workpiece state 106a of the sub-holder 22 holding the workpiece 5 associated with the cut identifier A is the cutting-finished state 107a, and the workpiece state 106b of the sub-holder 22 holding the workpiece 5 associated with the cut identifier B is the cutting-in-progress state 107b. Thus, the notifying processor 148 visually notifies the user of whether each of the workpieces 5 has finished being cut. Consequently, the present embodiment enables the user to easily determine whether each of the workpieces 5 has finished being cut by looking at the display screen 105.

In the present embodiment, the target list generation processor 134 generates the target list by extracting the replacement commands from the machining programs of the machining files and extracting the target identifiers designated by the replacement commands extracted by the target list generation processor 134. Generating the target list using the replacement commands of the machining programs in this manner makes it possible to extract the necessary identifiers of the workpieces 5 to be cut by execution of the machining programs. Thus, the present embodiment provides the target list with higher accuracy.

In the present embodiment, the cutting side reception processor 118 receives the machining programs that are stored in the machining files to which the file identifier commands designating the file identifiers in the association list 152 are added and that are transmitted from the notification side transmission processor 140. The cutting control processor 120 controls the cutting apparatus 60 and the workpiece conveyor 30 in accordance with the machining programs received by the cutting side reception processor 118. Thus, the machining programs are transmitted from the cutting notification apparatus 130 to the controller 110. Accordingly, the cutting notification apparatus 130 enables the controller 110 to recognize which machining program is to be executed. This allows the controller 110 to operate in conjunction with the cutting notification apparatus 130. Consequently, the user is notified of whether each of the workpieces 5 has finished being cut.

In the present embodiment, the recognition processor 122 of the controller 110 executes the file identifier command so as to recognize the machining file storing the machining program. When the recognition processor 122 executes the file identifier command in the machining program, the first extraction processor 123a extracts the yet-to-be-cut identifiers that are the target identifiers associated with the file identifiers in the association list 152 other than the execution file identifiers. The second extraction processor 123b extracts the cut identifiers that are the target identifiers associated with the execution file identifiers included in the file identifiers in the association list 152. The cutting side transmission processor 124 transmits, to the notification side reception processor 142, information on the yet-to-be-cut identifiers and information on the cut identifiers. The file identifiers assigned to the machining files are different from each other. This enables the recognition processor 122 to easily recognize, on the basis of the file identifier, the machining program of which machining file is being executed.

In the present embodiment, the controller 110 extracts the yet-to-be-cut identifiers and the cut identifiers and transmits, to the cutting notification apparatus 130, information on the yet-to-be-cut identifiers and cut identifiers extracted. Suppose that the cutting system 100 includes a first cutting notification apparatus 130 and a second cutting notification apparatus 130, and the first cutting notification apparatus 130 is connected to the controller 110. In this case, during cutting, for example, the first cutting notification apparatus 130 may be disconnected from the controller 110, and the second cutting notification apparatus 130 may be connected to the controller 110. In such a situation, the controller 110 transmits the information on the yet-to-be-cut identifiers and the cut identifiers to the second cutting notification apparatus 130. Thus, upon receiving the information on the yet-to-be-cut identifiers and the cut identifiers, the second cutting notification apparatus 130 notifies the user of whether each of the workpieces 5 has finished being cut.

In the present embodiment, the reading processor 114 of the controller 110 causes the reader 58 to read, before cutting is performed by the cutting apparatus 60, the identifiers stored in the storages 3 of the workpieces 5 held in the holder 13. The identifier transmission processor 116 transmits the read identifiers read by the reading processor 114 to the cutting notification apparatus 130. The error notification processor 150 of the cutting notification apparatus 130 provides an error notification when at least one of the target identifiers in the target list is not included in the read identifiers transmitted from the identifier transmission processor 116. This makes it possible to check whether the workpiece 5 to be cut in accordance with the machining program is held in the holder 13 before execution of the machining program. Suppose that a machining program is executed although a workpiece having an identifier identical to an associated target identifier designated by the machining program to be executed is not held in a holder. In such a case, a cutting apparatus will recognize in the course of cutting that the target workpiece is not held in the holder, so that cutting performed by the cutting apparatus will be interrupted in progress. In the present embodiment, however, the error notification processor 150 provides, before the machining program is executed, an error notification when the workpiece 5 having the identifier identical to the associated target identifier designated by the machining program to be executed is not held in the holder 13. Thus, the cutting apparatus 60 does not start cutting the workpieces 5 in this case. This prevents interruption of in-progress cutting resulting from the situation where the target workpiece 5 is not held in the holder 13.

In the present embodiment, the error notification processor 150 extracts the differential identifiers that are identifiers included in the read identifiers transmitted from the identifier transmission processor 116 but not included in the preliminary list stored in the storage processor 132. The error notification processor 150 provides an error notification when at least one of the target identifiers in the target list is not included in the differential identifiers. Thus, when the cutting notification apparatus 130 determines whether the target identifiers are included in the read identifiers, the cutting notification apparatus 130 is only required to determine whether the target identifiers are included in the differential identifiers. The number of differential identifiers is equal to or smaller than the number of read identifiers. This results in a reduction in the time required for the cutting notification apparatus 130 to determine whether the target identifiers are included in the read identifiers.

In the present embodiment, each storage 3 (see FIG. 2) stores any one of a bar code, a two-dimensional code, and an IC tag. This allows the reader 58 to easily read the identifiers stored in the storages 3.

In the present embodiment, the cutting side transmission processor 124 of the controller 110 transmits information on the yet-to-be-cut identifiers and information on the cut identifiers to the notification side reception processor 142 of the cutting notification apparatus 130. Alternatively, the cutting side transmission processor 124 may transmit either one of information on the yet-to-be-cut identifiers and information on the cut identifiers to the notification side reception processor 142. When the cutting side transmission processor 124 transmits, for example, only information on the yet-to-be-cut identifiers to the notification side reception processor 142, the cutting notification apparatus 130 may extract, using the association list 152, the cut identifiers on the basis of the yet-to-be-cut identifiers received.

In the present embodiment, the controller 110 includes the first extraction processor 123a and the second extraction processor 123b, so that the controller 110 extracts the yet-to-be-cut identifiers and the cut identifiers. Alternatively, the first extraction processor 123a and the second extraction processor 123b may be provided in the cutting notification apparatus 130. In this case, the cutting side transmission processor 124 of the controller 110 transmits the execution file identifiers (each of which is the file identifier designated by the file identifier command to be executed or the file identifier designated by the file identifier command that has already been executed) to the notification side reception processor 142. The first extraction processor 123a of the cutting notification apparatus 130 may extract the yet-to-be-cut identifiers on the basis of the execution file identifiers received and the association list 152. The second extraction processor 123b of the cutting notification apparatus 130 may extract the cut identifiers on the basis of the execution file identifiers received, the association list 152, and the yet-to-be-cut identifiers, for example. Also in such a case, the notifying processor 148 provides a notification indicating which workpiece 5 is yet to be cut and which workpiece 5 has finished being cut. This enables the user to determine, even during cutting, whether each of the workpieces 5 has finished being cut.

In the present embodiment, the target list is generated by the target list generation processor 134. The target list, however, does not necessarily have to be generated by the target list generation processor 134. Alternatively, the target list may be stored in the storage processor 132 of the cutting notification apparatus 130 in advance. In this case, step S101 of FIG. 13 may be omitted.

The processors of the controller 110 (i.e., the storage processor 112, the reading processor 114, the identifier transmission processor 116, the cutting side reception processor 118, the cutting control processor 120, the recognition processor 122, the first extraction processor 123a, the second extraction processor 123b, and the cutting side transmission processor 124) and the processors of the cutting notification apparatus 130 (i.e., the storage processor 132, the target list generation processor 134, the file identifier addition processor 136, the association list generation processor 138, the notification side transmission processor 140, the notification side reception processor 142, the notifying processor 148, and the error notification processor 150) may be implemented by software. Specifically, a computer program may be read into a computer so as to implement the functions of the processors of the controller 110 and the processors of the cutting notification apparatus 130 by the computer. The present invention includes a computer program to allow a computer to function as the processors of the controller 110 and the processors of the cutting notification apparatus 130. The present invention further includes a non-transitory computer-readable storage medium storing the computer program. Each of the processors of the controller 110 and the processors of the cutting notification apparatus 130 may be provided by a single processor or a plurality of processors. The present invention further includes a circuit having the functions similar to those of a program to be executed by each of the processors of the controller 110 and the processors of the cutting notification apparatus 130.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A cutting notification apparatus being configured to provide a notification indicating whether each of a plurality of workpieces has finished being cut, the cutting notification apparatus being configured to be included in a cutting system including:
a workpiece container including a holder to hold the workpieces;
a cutting apparatus configured to cut the workpieces in accordance with machining programs;
a workpiece conveyor configured to convey the workpiece held in the holder to the cutting apparatus; and
a controller configured or programmed to control the cutting apparatus and the workpiece conveyor, wherein
identifiers to identify the workpieces are assigned to the workpieces, wherein the cutting notification apparatus comprises
a storage processor storing machining files and a target list, the machining files each storing an associated one of the machining programs, the target list being a list of target identifiers that are the identifiers assigned to the workpieces to be cut in accordance with the machining programs of the machining files,
a file identifier addition processor configured to add file identifier commands to the machining programs of the machining files, the file identifier commands designating file identifiers to identify the machining files,
an association list generation processor configured to generate an association list that creates an association between each of the file identifiers and an associated one of the target identifiers of the workpieces to be cut in accordance with the machining programs in the machining files to which the file identifier commands associated with the file identifiers are added,
a notification side transmission processor configured to transmit, to the controller, the association list and the machining programs of the machining files to which the file identifier commands designating the file identifiers in the association list are added,
a notification side reception processor configured to receive information on a yet-to-be-cut identifier from the controller, the yet-to-be-cut identifier being the target identifier associated with the file identifier in the association list other than an execution file identifier, the execution file identifier being the file identifier designated by the file identifier command to be executed during cutting or the file identifier designated by the file identifier command that has already been executed, and
a notifying processor configured to provide a notification indicating that the workpiece associated with the yet-to-be-cut identifier is yet to be cut, and provide a notification indicating that the workpiece associated with a cut identifier is being cut or has finished being cut, the cut identifier being the target identifier in the association list other than the yet-to-be-cut identifier.

2. The cutting notification apparatus according to claim 1, wherein
the machining programs each include a replacement command to replace a target workpiece to be cut by the cutting apparatus, the replacement command designating the identifier associated with the target workpiece, and
the cutting notification apparatus further comprises a target list generation processor configured to generate the target list by extracting the replacement commands from the machining programs of the machining files and extracting the identifiers designated by the replacement commands extracted.

3. The cutting notification apparatus according to claim 1 or 2, further comprising a display screen, wherein
the notifying processor is configured to present, on the display screen, information indicating that the workpiece associated with the yet-to-be-cut identifier is yet to be cut.

4. The cutting notification apparatus according to claim 3, wherein
the notifying processor is configured to present, on the display screen, information indicating that the workpiece associated with the cut identifier is being cut or has finished being cut.

5. A cutting system comprising:
a workpiece container including a holder to hold a plurality of workpieces;
a cutting apparatus configured to cut the workpieces in accordance with machining programs;
a workpiece conveyor configured to convey the workpiece held in the holder to the cutting apparatus;
a controller configured or programmed to control the cutting apparatus and the workpiece conveyor; and
the cutting notification apparatus according to any one of claims 1 to 4.

6. The cutting system according to claim 5, wherein
the controller includes
a cutting side reception processor configured to receive the association list and the machining programs of the machining files to which the file identifier commands designating the file identifiers in the association list are added, the association list and the machining programs being transmitted from the notification side transmission processor,
a cutting control processor configured to control the cutting apparatus and the workpiece conveyor in accordance with the machining programs received by the cutting side reception processor,
a first extraction processor configured to, when the file identifier command in the machining program is executed, extract the yet-to-be-cut identifier associated with the file identifier in the association list other than the execution file identifier, and
a cutting side transmission processor configured to transmit information on the yet-to-be-cut identifier to the notification side reception processor.

7. The cutting system according to claim 6, wherein
the controller further includes a second extraction processor configured to extract the cut identifier that is the target identifier associated with the execution file identifier included in the file identifiers in the association list, and
the cutting side transmission processor transmits information on the cut identifier to the notification side reception processor.

8. The cutting system according to any one of claims 5 to 7, wherein
the workpieces are each provided with a storage storing an associated one of the identifiers,
the workpiece conveyor includes a reader configured to read the identifiers stored in the storages,
the controller further includes
a reading processor configured to cause the reader to read, before the workpieces are cut by the cutting apparatus, the identifiers stored in the storages of the workpieces held in the holder, and
an identifier transmission processor configured to transmit the read identifiers read by the reading processor to the cutting notification apparatus, and
the cutting notification apparatus further includes an error notification processor configured to provide an error notification when at least one of the target identifiers in the target list is not included in the read identifiers transmitted from the identifier transmission processor.

9. The cutting system according to claim 8, wherein
the storage processor stores a preliminary list that is the target list used in a preceding round, and
the error notification processor extracts differential identifiers that are the identifiers included in the read identifiers transmitted from the identifier transmission processor but not included in the preliminary list, and provides an error notification when at least one of the target identifiers in the target list is not included in the differential identifiers.

10. The cutting system according to claim 8 or 9, wherein
the storages each store any one of a bar code, a two-dimensional code, and an IC tag.
